(19) **Europäisches Patentamt**

**European Patent Office**

**Office européen des brevets**

(11) **EP 0 739 944 B1**

(12) **EUROPEAN PATENT SPECIFICATION**

(45) Date of publication and mention
of the grant of the patent:
**23.08.2000 Bulletin 2000/34**

(51) Int Cl.⁷: **C08L 53/00**, C08K 3/34

(21) Application number: **96106782.4**

(22) Date of filing: **29.04.1996**

(54) **Thermoplastic resin composition and injection molded article thereof**

Thermoplastische Harzzusammensetzung und Spritzgussformteil daraus

Composition de résine thermoplastique et article moulé par injection

(84) Designated Contracting States:
**DE FR GB IT**

(30) Priority: **27.04.1995 JP 10447095**

(43) Date of publication of application:
**30.10.1996 Bulletin 1996/44**

(73) Proprietors:
• **SUMITOMO CHEMICAL COMPANY LIMITED**
**Osaka-shi, Osaka 541-0041 (JP)**
• **TOYOTA JIDOSHA KABUSHIKI KAISHA**
**Aichi-ken (JP)**

(72) Inventors:
• **Sadatoshi, Hajime**
**Ichihara-shi (JP)**
• **Ohkawa, Kenichi**
**Ichihara-shi (JP)**
• **Doi, Teruhiko**
**Sodegaura-shi (JP)**
• **Miyake, Yuichi**
**Meito-ku, Nagoya-shi (JP)**
• **Nomura, Takao**
**Kosemacho, Toyota-shi (JP)**
• **Nishio, Takeyoshi**
**Hosokawacho, Okazaki-shi (JP)**

(74) Representative: **VOSSIUS & PARTNER**
**Siebertstrasse 4**
**81675 München (DE)**

(56) References cited:
**EP-A- 0 531 054**          **EP-A- 0 580 069**

## Description

This invention relates to a thermoplastic resin composition which is excellent in rigidity and impact resistance in respect of physical properties, has a short molding cycle in respect of injection moldability and is characterized in that its molded article is excellent in surface quality, for example, the molded article has neither flow mark nor weldline and is free from surface strain.

More particularly, it relates to a thermoplastic resin composition which comprises a major amount of a specific crystalline polypropylene and minor amounts of rubber components such as a specific ethylene-butene-1 copolymer rubber and talc and which is excellent in rigidity and impact resistance in respect of physical properties, has a short molding cycle in respect of injection moldability and is excellent in surface quality of its molded article, and to an injection-molded article, particularly an instrumental panel, excellent in dimension stability obtained by subjecting the above thermoplastic resin composition to injetion-molding.

As a material for instrumental panel, crystalline propylene-ethylene block copolymers have recently been used from the viewpoint of light weight, low cost and the like. However, conventional instrumental panels made of a crystalline propylene-ethylene block copolymer are low in impact strength and contain a large amount of inorganic fillers for imparting thereto rigidity and thermal properties such as heat distortion temperature and the like. Therefore, the above instrumental panels have a considerably large specific gravity.

It has been proposed in, for example, JP-A-53-22,552 and JP-A-53-40,045 to incorporate an ethylene-propylene copolymer rubber into a crystalline propylene-ethylene block copolymer for improving the impact strength of the latter. However, the crystalline propylene-ethylene block copolymer containing an ethylene-propylene copolymer rubber is inferior in rigidity and thermal properties such as heat distortion temperature and the like. For overcoming this disadvantage, it has been proposed in, for example, JP-A-51-136,735, JP-A-53-64,256, JP-A-53-64,257, JP-A-57-55,952, JP-A-57-207,730, JP-A-58-17,139, JP-A-58-111,846, JP-A-59-98,157 and JP-B-55-3,374 and the like to incorporate an inorganic filler such as calcium carbonate, barium sulfate, mica, crystalline calcium silicate, talc or the like together with the ethylene-propylene copolymer rubber. Also, it is stated that by incorporating talc in JP-A-51-136,735 and by incorporating talc, mica or calcium silicate in JP-A-57-207,630, the molding shrinkage can be made smaller and the dimension stability can be improved.

Also, JP-A-58-17,139 and JP-A-58-17,140 propose to incorporate into the crystalline propylene-ethylene block copolymer an ethylene-butene-1 copolymer rubber in place of the ethylene-propylene copolymer rubber. In particular, in JP-A-58-17,140, it is stated that as compared with the ethylene-propylene copolymer rubber, the use of an ethylene-butene-1 copolymer rubber can make the impact whitened area small and can improve the resistance to wounding.

The crystalline propylene-ethylene copolymer/ethylene-propylene copolymer rubber/talc composition (referred to hereinafter as the ethylene-propylene copolymer rubber based composition) has been widely used as a material for instrumental panel and is molded by a conventional injection molding method into instrumental panels because the ethylene-propylene copolymer rubber based composition is inexpensive and has good moldability. In respect of injection moldability, it is required that firstly the molding cycle of the composition can be shortened to increase the productivity and secondly, when the above composition is subjected to injection molding, there can be given an instrumental panel molded article having such an excellent surface quality that the molded article has neither flow mark nor weldline and is free from surface strain.

However, the conventional ethylene-propylene copolymer rubber based composition can be improved in surface quality in the injection molding by simply enhancing the flow properties; however, the molded article obtained cannot satisfy the impact strength required for instrumental panel. On the other hand, though the filling time can be shortened, the plasticizing time becomes longer, so that it has a problem that the molding cycle time is consequently not shortened.

An object of this invention is to provide a thermoplastic resin composition which comprises a crystalline polypropylene in a major amount, satisfies the impact strength and rigidity required for instrumental panel, has a better level of brittleness temperature than that of the conventional ethylene-propylene copolymer based rubber composition, and, in respect of the injection moldability, has a short molding cycle and a good surface quality.

Another object of this invention is to provide a thermoplastic resin composition which comprises (A) a crystalline polypropylene, (B) an ethylene-butene-1 copolymer rubber, (C) an ethylene-propylene copolymer rubber and (D) talc.

A still another object of this invention is to provide an injection molded article, particularly an instrumental panel, obtained by subjecting the above thermoplastic resin composition to injection molding.

According to this invention, there is provided a thermoplastic resin composition which has a melt flow rate (JIS-K-6758, 230°C) of 8 to 15 g/10 min and a flexural modulus at 23°C of 20,000 kg/cm$^2$ or more and which comprises:

(A) 60 to 76% by weight of a crystalline polypropylene selected from the group consisting of:

(i) a crystalline propylene-ethylene block copolymer composed of a propylene homopolymer portion which is the first segment and a propylene-ethylene random copolymer portion which is the second segment (referred to hereinafter as (A')), said propylene homopolymer portion having a Q value of 3.0 to 5.0 which is the weight average molecular weight (Mw)/number average molecular weight (Mn) ratio according to a gel permeation chromatography (GPC), an isotactic pentad fraction of 0.975 or more as calculated by $^{13}$C-NMR, and an intrinsic viscosity of 1.20 to 1.40 dl/g as measured at 135°C in tetralin; said propylene-ethylene random copolymer portion having an intrinsic viscosity of 4.5 to 5.5 dl/g as measured at 135°C in tetralin and a propylene content/ethylene content ratio of 75/25 to 60/40 (weight % ratio), and

(ii) a mixture of the above crystalline propylene-ethylene block copolymer (i) with a crystalline propylene homopolymer having a Q value as defined above of 3.0 to 5.0, an isotactic pentad fraction of 0.975 or more as calculated by $^{13}$C-NMR and an intrinsic viscosity of 0.95 to 1.15 dl/g as measured at 135°C in tetralin;

(B) 2 to 10% by weight of an ethylene-butene-1 copolymer rubber which has a Q value as defined above of 2.7 or less, a butene-1 content of 15 to 20% by weight, an intrinsic viscosity of 1.0 to 2.0 dl/g as measured at 70°C in xylene and a Mooney viscosity at 100°C ($ML_{1+4}$ 100°C) of 7 to 90,

(C) 2 to 10% by weight of an ethylene-propylene copolymer rubber which has a Q value as defined above of 2.7 or less, a propylene content of 20 to 30% by weight, an intrinsic viscosity of 0.8 to 2.0 dl/g as measured at 70°C in xylene and a Mooney viscosity at 100°C ($ML_{1+4}$ 100°C) of 5 to 60 and

(D) 16 to 25% by weight of talc having an average particle diameter of 4 $\mu$m or less,

wherein the contents of (A), (A'), (B), (C) and (D) satisfy the following equations 1) to 4):

1) (A) + (B) + (C) + (D) = 100
2) $0.08 \leqq [(B) + (C)]/100 \leqq 0.15$
3) $0.18 \leqq \{[(A') + (B) + (C)]/100\} \leqq 0.25$
4) $0.20 \leqq \{(B)/[(B) + (C)]\} \leqq 0.80$.

This invention further provides an injection molded article, particularly an instrumental panel, obtained by subjecting the above thermoplastic resin composition to injection molding.

In this invention, the crystalline polypropylene (A) refers to (i) a crystalline propylene-ethylene block copolymer composed of a crystalline propylene homopolymer portion as the first segment and a propylene-ethylene random copolymer portion as the second segment or (ii) a mixture of the crystalline propylene-ethylene block copolymer (i) with a crystalline propylene homopolymer.

Here, the physical properties, required when the crystalline polypropylene (A) is (i) a crystalline propylene-ethylene block copolymer composed of a crystalline homopolymer portion as the first segment and a propylene-ethylene random copolymer portion as the second segment are as follows:

In the crystalline propylene-ethylene block copolymer (i), the Q value which is the weight average molecular weight (Mw)/number average molecular weight (Mn) ratio which indicates the molecular weight distribution according to the gel permeation chromatography (GPC) of the propylene homopolymer portion which is the first segment is 3.0 to 5.0, preferably 3.5 to 4.5. When the Q value is less than 3.0, the flow properties are deteriorated, and when the Q value exceeds 5.0, no preferable results are obtained in respect of molding cycle and surface quality in the injection molding.

The isotactic pentad fraction as calculated by $^{13}$C-NMR is 0.975 or more, preferably 0.980 or more. When the isotactic pentad fraction is less than 0.975, it is difficult to satisfy the desired rigidity, heat resistance and the like.

The intrinsic viscosity $[\eta]_p$ as measured at 135°C in tetralin of the propylene homopolymer portion is 1.20 to 1.40 dl/g. When the intrinsic viscosity exceeds 1.40 dl/g, the melt flow rate of the composition becomes low, the flow properties are deteriorated, the filling time becomes long, owing to which the molding cycle becomes long, and consequently, no good surface quality is obtained. When the intrinsic viscosity is less than 1.20 dl/g, the tensile elongation and impact strength are low in respect of physical properties, and though good surface quality is obtained in respect of injection moldability, the plasticizing time becomes long and hence the molding cycle becomes long. Consequently, no preferable results are obtained.

The propylene homopolymer portion can be obtained by taking out the reaction product from a polymerizer after the homopolymerization of propylene in the first step of the process for producing the crystalline propylene-ethylene block copolymer (i).

The ethylene content $(C_2')_{EP}$ of the propylene-ethylene random copolymer portion which is the second segment is 25 to 40% by weight, preferably 30 to 35% by weight. When the ethylene content is less than 25% by weight or more than 40% by weight, no preferable results are obtained in respect of the impact resistance of the composition. When the intrinsic viscosity $[\eta]_{EP}$ of the propylene-ethylene random copolymer portion is 4.5 to 5.5 dl/g, preferably 4.8 to 5.3 dl/g. When it is less than 4.5 dl/g, flow mark is generated during the injection molding and when it is more than 5.5 dl/g, granular structure is formed and no preferable results are obtained in respect of the surface quality.

The physical properties of the crystalline propylene homopolymer required when the crystalline polypropylene (A) is (ii) a mixture of the above crystalline propylene-ethylene block copolymer (i) with the crystalline propylene homopolymer are as follows:

Similarly to the propylene homopolymer portion of the above crystalline propylene-ethylene block copolymer (i), the Q value of the crystalline propylene homopolymer which Q value is the weight average molecular weight (Mw) /number average molecular weight (Mn) ratio which indicates the molecular weight distribution according to GPC is 3.0 to 5.0, preferably 3.5 to 4.5, and the isotactic pentad fraction as calculated by $^{13}$C-NMR of the crystalline porpylene homopolymer is 0.975 or more, preferably 0.980 or more. Also, the intrinsic viscosity as measured at $135°C$ in tetralin of the crystalline propylene homopolymer is 0.95 to 1.15 dl/g.

Next, methods for measuring the above various physical properties are explained. The isotactic pentad fraction is the fraction of propylene monomer unit existing at the center of the isotactic chain in the form of a pentad unit, in other words, the chain in which five propylene monomer units are successively meso-bonded, in the crystalline polypropylene molecular chain as measured by the method disclosed by A. Zambelli et al. in Macromolecules, 6, 925 (1973), namely by use of $^{13}$C-NMR. However, the attribution of NMR absorption peak is based on Macromolecules, 8, 687 (1975) published thereafter.

Specifically, the isotactic pentad fraction is measured as an area fraction of mmmm peak to the total absorption peak in the methyl carbon region of the $^{13}$C-NMR spectrum. When the isotactic pentad fraction of the NPL standard substance CRM No. M19-14 Polypropylene PP/MWD/2 of NATIONAL PHYSICAL LABORATORY in U.K. was measured by this method, it was 0.944.

In the crystalline propylene-ethylene block copolymer (i), the weight ratio X of the propylene-ethylene random copolymer portion to the total block copolymer can be determined by calculation from the following equation by measuring the quantity of heat of fusion of crystal of each of the crystalline propylene homopolymer portion and the total block copolymer:

$$X = 1 - (\Delta Hf)_T/(\Delta Hf)_P$$

wherein $(\Delta Hf)_T$ is the quantity of heat of fusion of the total block copolymer (cal/g) and $(\Delta Hf)_P$ is the quantity of heat of fusion of the crystalline propylene homopolymer portion (cal/g).

The ethylene content of the propylene-ethylene random copolymer portion can be determined by calculation from the following equation by measuring the ethylene content (% by weight) of the total block copolymer by the infrared absorption spectrum method:

$$(C_2')_{EP} = (C_2')_T/X$$

wherein $(C_2')_T$ is the ethylene content (% by weight) of the total block copolymer and $(C_2')_{EP}$ is the ethylene content (% by weight) of the propylene-ethylene random copolymer portion.

Moreover, in the crystalline propylene-ethylene block copolymer (i), the intrinsic viscosity $[\eta]_{EP}$ of the propylene-ethylene random copolymer portion as measured at $135°C$ in tetralin can be determined by calculation from the following equation by measuring the intrinsic viscosity of each of the crystalline propylene homopolymer portion and the total block copolymer:

$$[\eta]_{EP} = [\eta]_T/X - (1/X - 1)[\eta]_P$$

wherein $[\eta]_P$ is the intrinsic viscosity (dl/g) of the crystalline propylene homopolymer portion and $[\eta]_T$ is the intrinsic viscosity (dl/g) of the total block copolymer.

When the composition is employed in uses in which impact resistance is particularly required, the crystalline polypropylene is preferably a crystalline propylene-ethylene block copolymer composed of a crystalline propylene homopolymer portion which is the first segment produced by polymerization in the first step and a propylene-ethylene random copolymer portion which is the second segment produced by polymerization in the second step.

Said block copolymer can be produced by a slurry polymerization method, a gas phase polymerization method or the like. When the composition is employed in uses in which high impact resistance is particularly required, it is necessary to increase the amount of the second segment and this segment is suitably produced by a gas phase polymerization method.

The high impact polypropylene produced by the gas phase polymerization method can be produced by the method illustrated in, for example, JP-A-61-287,917, namely, a method which comprises homopolymerizing propylene or copolymerizing ethylene or an $\alpha$-olefin having 4 to 6 carbon atoms with propylene so that the content of ethylene or the $\alpha$-olefin in the copolymer produced in said step becomes 6 mole % or less, in the presence of a catalyst consisting of a solid catalyst component containing at least titanium, chlorine and an electron donating compound; and an organoaluminum compound; and if necessary an electron donating compound in liquefied propylene or in a gas phase in the first step, and then, in the second step, in a gas phase, homopolymerizing ethylene or copolymerizing ethylene and propylene and if necessary an $\alpha$-olefin having 4 to 6 carbon atoms so that the ethylene content in the copolymer produced in the second step becomes 10 mole % or more and the amount of the polymer produced in the second step becomes 10 to 70% by weight based on the total weight of the polymer produced in the first and second steps.

In the case of the slurry polymerization method, the amount of the second segment is preferably in the range of 10 to 30% by weight and, in the case of the gas phase polymerization method, it is preferably in the range of 10 to 70% by weight.

In the case of the gas phase polymerization method, a crystalline propylene-ethylene block copolymer having a larger amount of the second segment can be produced by the method illustrated in JP-A-1-98,604, namely, a method in which using a catalyst system consisting of a solid catalyst component containing at least titanium, chlorine and an electron-donating compound; an organoaluminum compound; and an electron-donating compound, an isotactic polypropylene is obtained by polymerization in liquefied propylene or in a gas phase in the first step, and subsequently, in the second step, ethylene and an $\alpha$-olefin are random-copolymerized in a gas phase so that the ethylene content in the copolymer produced in the second step becomes 15 to 90 mole % and the amount of the polymer produced in the second step becomes 60 to 97% by weight based on the weight of the total polymer produced in the first and second steps. The resulting resin composition can suitably be employed in uses in which super high impact resistance is required.

The ethylene-butene-1 copolymer rubber (B) in this invention is a random copolymer of ethylene and butene-1, and the butene-1 content in the ethylene-butene-1 copolymer rubber (B) is 15 to 20% by weight, preferably 16 to 19% by weight, more preferably 17 to 18% by weight. When the butene-1 content is less than 15% by weight, no preferable results are obtained in respect of impact resistance, and when the butene-1 content is more than 20% by weight, no preferable results are obtained in respect of surface hardness.

The Q value according to GPC of the ethylene-butene-1 copolymer rubber (B) is 2.7 or less, preferably 2.5 or less, and the intrinsic viscosity as measured at 70°C in xylene and the Mooney viscosity at 100°C ($ML_{1+4}$ 100°C) of the ethylene-butene-1 copolymer rubber (B) are 1.0 to 2.0 dl/g and 7 to 90, respectively, preferably 1.2 to 1.8 dl/g and 10 to 80, respectively. When the Q value is more than 2.7, the surface hardness becomes low, and hence, such a Q value is not desirable. When the intrinsic viscosity as measured at 70°C in xylene is less than 1.0 dl/g and the Mooney viscosity at 100°C ($ML_{1+4}$ 100°C) is less than 7, no preferable results are obtained in respect of impact strength, and when they are more than 2.0 dl/g and more than 90, respectively, the dispersion of the ethylene-butene-1 copolymer rubber (B) in the crystalline polypropylene (A) is inferior and no preferable results are obtained in respect of impact strength.

The ethylene-propylene copolymer rubber (C) in this invention is a random copolymer rubber of ethylene and propylene or an ethylene-propylene-non-conjugated diene copolymer rubber, and the propylene content in the ethylene-propylene copolymer rubber is 20 to 30% by weight, preferably 22 to 28% by weight. When the propylene content is less than 20% by weight, no preferable results are obtained in respect of impact strength, and when the propylene content is more than 30% by weight, no preferable results are obtained in respect of surface hardness. When the ethylene-propylene-non-conjugated diene copolymer rubber is used, the content of the non-conjugated diene in the rubber is preferably adjusted to 7% by weight or less. When the content of the non-conjugated diene exceeds 7% by weight, gelation is caused in the kneading and hence such a content is not desirable.

The Q value according to GPC of the ethylene-propylene copolymer rubber is 2.7 or less, preferably 2.5 or less, and the intrinsic viscosity as measured at 70°C in xylene and the Mooney viscosity at 100°C ($ML_{1+4}$ 100°C) of the ethylene-propylene copolymer rubber are 0.8 to 2.0 dl/g and 5 to 60, respectively, preferably 1.0 to 1.8 dl/g and 10 to 50, respectively.

When the Q value exceeds 2.7, the surface hardness becomes low and hence such a Q value is not desirable. When the intrinsic viscosity as measured at 70°C in xylene is less than 0.8 dl/g and the Mooney viscosity at 100°C (ML1+4 100°C) is less than 5, no preferable results are obtained in respect of impact strength. When they are more than 2.0 dl/g and more than 60, respectively, the dispersion of the ethylenepropylene copolymer rubber (C) in the crystalline polypropylene (A) becomes inferior and no preferable results are obtained in respect of impact strength.

In this invention, the content of the crystalline polypropylene (A) in the final composition is 60 to 76% by weight. Also, in the final composition, the content of each of the ethylene-butene-1 copolymer rubber (B) and the ethylene-propylene copolymer rubber (C) is 2 to 10% by weight, preferably 3 to 8% by weight. Also, the total content of the components (B) and (C) is 8 to 15% by weight, preferably 9 to 12% by weight. Moreover, when the relation between the proportions of the components (B) and (C) and the content of the second segment (A') in the crystalline propylene-ethylene block copolymer (i) of the component (A) are taken into consideration, the total content [(A') + (B) + (C)] must satisfy the following equations:

1) (A) + (B) + (C) + (D) = 100
2) $0.08 \leqq [(B) + (C)]/100 \leqq 0.15$
3) $0.18 \leqq \{[(A') + (B) + (C)]/100\} \leqq 0.25$
4) $0.30 \leqq \{(B)/[(B) + (C)]\} \leqq 0.80$

When the total content [(A') + (B) + (C)] is smaller than the lowest value satisfying the above equations or higher than the highest value satisfying the above equations, no thermoplastic resin composition having well balanced physical properties in respect of rigidity and impact strength is obtained.

The average particle diameter of the talc (D) used in this invention is not more than 4 μm, preferably not more than 3 μm. When the average particle diameter is more than 4 μm, the impact strength is greatly lowered and the appearance including gloss and the like becomes inferior. Untreated talc may be used as it is; however, for the purpose of improving the interfacial adhesiveness to the polypropylene resin and also improving the dispersibility, it is possible to use talc surface-treated with a silane-coupling agent, a titanium-coupling agent, a higher fatty acid, a higher fatty acid ester, a higher fatty acid amide, a higher fatty acid salt or another surfactant which are usually known.

The term "average particle diameter of talc" used herein means the 50% particle diameter D50 determined from the integrated distribution curve of an undersize particle method obtained by suspending talc particles in a dispersion medium such as water, alcohol or the like and measuring the particle diameters by means of a centrifugal sedimentation type particle size distribution measuring instrument.

The talc content in the final composition is 16 to 25% by weight, preferably 18 to 22% by weight.

As the specific physical properties of the final composition, it is necessary that the melt flow rate (JIS-K-6758, at 230°C, under a load of 2.16 kg) be 8 to 15 g/10 min and the flexural modulus at 23°C be 20,000 kg/cm$^2$ or more. Moreover, it is desirable that the impact strength is 20 kg•cm/cm or more in terms of an Izod impact strength (notched) at 23°C; the brittleness temperature is not more than 2°C; and the heat distortion temperature (HDT) is not less than 70°C.

The thermoplastic resin composition aimed at by this invention can be obtained only when the structure of each of the components used is as specified above and the proportion of each of the components blended is limited to the specific range.

The composition of this invention can be produced by use of a kneader such as a single screw extruder, a twin screw extruder, a Banbury mixer, a heated roll or the like. The necessary components may be mixed at one time or in portions. When the components are added in portions, there can be used a method which comprises kneading the crystalline polypropylene and talc and then adding the ethylene-butene-1 copolymer rubber, the ethylene-propylene copolymer rubber and a vinyl aromatic compound-containing rubber (these rubbers are referred to hereinafter collectively as the rubbers) or a method which comprises previously kneading talc at a high concentration with the crystalline polypropylene to prepare a master batch and separately kneading, while diluting, the master batch with the crystalline polypropylene, the rubbers and the like. Moreover, as a second method of addition in portions, there are a method which comprises kneading the crystalline polypropylene with the rubbers, then adding talc thereto and kneading them, and a method which comprises previously kneading the rubbers at a high concentration with the crystalline polypropylene to prepare a master batch, then adding thereto the crystalline polypropylene and talc and kneading them. As a third method of addition in portions, there is a method which comprises previously and separately kneading the crystalline polypropylene with talc, and the crystalline polypropylene with the rubbers, and finally combining and kneading the resulting mixtures. In general, the temperature necessary for the kneading is 170-250°C, and the time is 1 to 20 minutes.

Furthermore, in the kneader, in addition to the above essential components, the following additives can be appropriately compounded therewith in such a range as not to impair the object of this invention: antioxidant, ultraviolet absorber, lubricant, pigment, antistatic agent, metal reactivator, flame retardant, neutralizer, foaming agent, plasticizer, nucleating agent, bubble inhibitor, cross-linking agent and the like.

The thermoplastic resin composition of this invention can be formed into an injection-molded article by a conventional injection molding method. In particular, the thermoplastic resin composition according to this invention is excellent in rigidity and impact strength and good in flow properties, excellent in appearance of molded article such as flow mark, weldline and the like. The thermoplastic resin composition of this invention can be suitably used in the production of an injection molded article, particularly an instrumental panel which is an injection molded article for automobile.

This invention is explained in more detail below referring to Examples.

The methods for measuring physical properties used in the Examples were as follows:

(1) Melt flow rate

According to the method defined in JIS-K-6758. The measurement temperature was 230°C and the load was 2.16 kg unless otherwise specified.

(2) Flexural test

According to the method defined in JIS-K-7203. A test piece prepared by injection molding was used. The test piece had a thickness of 6.4 mm, and the flexural modulus was evaluated under the conditions of a span of 100 mm and a loading rate of 2.0 mm/min. The measurement temperature was 23°C unless otherwise specified.

(3) Izod impact strength (IZOD Impact)

According to the method defined in JIS-K-7110. A test piece prepared by injection molding was used. The test piece had a thickness of 6.4 mm and was subjected to notch processing and then to evaluation of Izod impact strength (notched). The measurement temperature was 23°C.

(4) Brittleness temperature (B.P.)

According to the method defined in JIS-K-6758. A test piece having a predetermined size of $6.3 \times 38 \times 2$ mm was punched out of a flat plate having a size of $5 \times 150 \times 2$ mm prepared by injection molding and then evaluated by the above-mentioned method.

(5) Heat distortion temperature (HDT)

According to the method defined in JIS-K-7207. A fiber stress was measured at 18.6 kg/cm$^2$.

(6) Mooney viscosity (ML$_{1+4}$ 100°C)

According to the method defined in JIS-K-6300. The measurement temperature was 100°C.

(7) Ethylene content, propylene content and butene-1 content

The ethylene or propylene content appearing in the infrared absorption spectrum obtained by preparing a press sheet and subjecting the same to measurement was determined by a calibration curve method using the absorbance of characteristic absorption of methyl group (-CH$_3$) or methylene group (-CH$_2$-) and the butene-1 content was determined by a calibration curve method using the absorbance of characteristic absorption of ethyl group.

(8) Intrinsic viscosity ([η])

Using an Ubbellohde viscometer, a reduced viscosity was measured at concentrations of 0.1, 0.2 and 0.5 g/dl to obtain three values. The intrinsic viscosity was determined by the calculation method stated in "Kobunshi Yoeki, Kobunshi Jikkengaku 11" (published by Kyoritsu Shuppan Kabushiki Kaisha in 1982), page 491, namely, an extrapolation method which comprises plotting the reduced viscosities to the concentrations and extrapolating the viscosity at a concentration of zero.
The crystalline polypropylene was evaluated using tetralin as a solvent at a temperature of 135°C. The ethylene-butene-1 copolymer rubber and the ethylene-propylene copolymer rubber were evaluated using xylene as a solvent at a temperature of 70°C.

(9) Molecular weight distribution (Q value)

Measured by a gel permeation chromatography (GPC) under the following conditions:

(a) Crystalline polypropylene

| GPC: | 150C Model manufactured by Water Company |
| Column: | Two Shodex 80 MA columns manufactured by Showa Denko K. K. |
| Amount of sample: | 300 μl (polymer concentration: 0.2 % by weight) |

| | |
|---|---|
| Flow rate: | 1 ml/min |
| Temperature: | 135°C |
| Solvent: | o-Dichlorobenzene |

Using a standard polystyrene prepared by TOSOH CORP., a calibration curve relating to eluate volume and molecular weight was prepared and the polystyrene-reduced weight average molecular weight and polystyrene-reduced number average molecular weight of a test sample were determined using the calibration curve, and thereafter, a Q value (= weight average molecular weight/number average molecular weight) was determined therefrom as a measure for molecular weight distribution.

(b) Ethylene-butene-1 copolymer rubber and ethylene-propylene copolymer rubber

| | |
|---|---|
| GPC: | 150C Model manufactured by Waters Company |
| Column: | One Shodex 80 MA column manufactured by Showa Denko K. K. |
| Amount of sample: | 300 μl (polymer concentration: 0.2% by weight) |
| Flow rate: | 1 ml/min |
| Temperature: | 145°C |
| Solvent: | o-Dichlorobenzene |

Using a standard polystyrene prepared by TOSOH CORP., a calibration curve relating to eluate volume and molecular weight was prepared and the polystyrene-reduced weight average molecular weight and polystyrene-reduced number average molecular weight of a test sample were determined using the calibration curve, and thereafter, a Q value (= weight average molecular weight/number average molecular weight) was determined therefrom as a measure for molecular weight distribution.

The test pieces for evaluating the physical properties in (2), (3), (4) and (5) above were prepared under the following injection molding conditions unless otherwise specified: The composition was dried at 120°C for two hours in a hot air drier and thereafter subjected to injection molding at a molding temperature of 220°C at a mold cooling temperature of 50°C for an injection time of 15 sec for a cooling time of 30 sec using IS150E-V Model injection machine manufactured by Toshiba Machine Co., Ltd.

The following compositions were prepared under the following conditions unless otherwise specified: The predetermined amount of each component was weighed, subjected to uniform pre-mixing by means of a Henschel mixer and a tumbler and thereafter subjected to extrusion by a twin screw extruder (TEX44SS 30BW-2V Model manufactured by THE JAPAN STEEL WORKS, LTD.) at an extrusion rate of 35 kg/hr at 900 rpm under vent suction.

Example 1

60% by weight of a propylene-ethylene block copolymer (BC-1), 11% by weight of a propylene homopolymer (PP-1), 7% by weight of an ethylene-butene-1 copolymer rubber (EBR), 3.5% by weight of an ethylene-propylene copolymer rubber (EPR) and 18.5% by weight of talc (TALC) having an average particle diameter of 2 μm were mixed with various stabilizers, and thereafter, the resulting mixture was kneaded under the predetermined conditions and then injection molded into a test piece. The proportions of the components used are shown in Table 2, and the results of evaluation of physical properties are shown in Table 3.

Examples 2 to 4 and Comparative Examples 1 to 4

In the same manner as in Example 1, the materials shown in Table 1 were subjected to injection molding to prepare test pieces having the compositions shown in Table 2. The results of evaluation of physical properties are shown in Table 3.

The Examples of this invention are good in balance and excellent in physical properties including tensile elongation, low temperature Izod impact strength, brittleness temperature and the like as compared with the Comparative Examples.

Table 1

| Sample | | P portion | | | EP portion | | |
|---|---|---|---|---|---|---|---|
| | | Q value | $[\eta]_P$ (dl/g) | Isotactic pentad fraction | $[\eta]_{EP}$ (dl/g) | Content 1 (%) | Content 2 (%) |
| Polypropylene | BC-1 | 4.1 | 1.35 | 0.980 | 5.2 | 18 | 35 |
| | BC-2 | 4.1 | 1.32 | 0.980 | 4.8 | 19 | 50 |
| | BC-3 | 4.0 | 1.83 | 0.974 | 4.7 | 18 | 40 |
| | PP-1 | 4.1 | 1.08 | 0.981 | -- | -- | -- |
| Sample | | Q value | $ML_{1+4}$ 100°C | $[\eta]$ dl/g | Comonomer content (wt%) | | |
| Rubber | EBR | 2.0 | 14 | 1.3 | 17 (Butene-1) | | |
| | EPR | 2.0 | 22 | 1.5 | 22 (Propylene) | | |

EP 0 739 944 B1

Note:   BC:          Propylene-ethylene copolymer

          PP:          Propylene homopolymer

          EPR:         Ethylene-propylene copolymer rubber

          EBR          Ethylene-butene-1 copolymer rubber

          P portion:  Propylene homopolymer portion of BC
or whole of PP

          EP portion: Propylene-ethylene random copolymer
portion of BC

          Content 1:  Content of EP portion in BC

          Content 2:  Ethylene content in EP portion

Table 2

| | Composition (wt%) | | | | | | |
|---|---|---|---|---|---|---|---|
| | BC-1 | BC-2 | BC-3 | PP-1 | EBR | EPR | TALC |
| Example 1 | 60 | -- | -- | 11 | 7 | 3.5 | 18.5 |
| Example 2 | 60 | -- | -- | 12.5 | 6 | 3 | 18.5 |
| Example 3 | 59 | -- | -- | 11 | 3.5 | 8 | 18.5 |
| Example 4 | 55 | -- | -- | 11 | 8 | 4 | 22 |
| Comp. Example 1 | 59 | -- | -- | 10.5 | 12 | -- | 18.5 |
| Comp. Example 2 | 55 | -- | -- | 11 | 12 | -- | 22 |
| Comp. Example 3 | -- | 60 | -- | 11 | 7 | 3.5 | 18.5 |
| Comp. Example 4 | -- | -- | 60 | 12.5 | 6 | 3 | 18.5 |

TALC:   Talc (Enstal 56 manufactured by Hayashi Kasei K.K.)

EP 0 739 944 B1

Table  3

| | Melt flow rate | Specific gravity | Flexural modulus | IZOD Impact | HDT | B.P. |
|---|---|---|---|---|---|---|
| Unit | g/10 min | – | kg/cm$^2$ | kg·cm/cm | °C | °C |
| Example 1 | 11 | 1.03 | 22900 | 37 | 76 | -1 |
| Example 2 | 12 | 1.03 | 23800 | 28 | 79 | 2 |
| Example 3 | 12 | 1.03 | 22000 | 42 | 72 | -2 |
| Example 4 | 9 | 1.08 | 23300 | 42 | 77 | 0 |
| Comp. Example 1 | 10 | 1.04 | 22000 | 37 | 74 | 4 |
| Comp. Example 2 | 9 | 1.06 | 23800 | 38 | 78 | 6 |
| Comp. Example 3 | 12 | 1.04 | 24500 | 18 | 79 | 11 |
| Comp. Example 4 | 11 | 1.04 | 23000 | 28 | 74 | 5 |

**Claims**

1. A thermoplastic resin composition which has a melt flow rate (JIS-K-6758, 230°C) of 8 to 15 g/10 min and a flexural modulus (JIS-K-7203) at 23°C of 20,000 kg/cm$^2$ or more and which comprises:

   (A) 60 to 76% by weight of a crystalline polypropylene selected from the group consisting of:

   (i) a crystalline propylene-ethylene block copolymer composed of a propylene homopolymer portion which is the first segment and a propylene-ethylene random copolymer portion which is the second segment (this second segment is referred to hereinafter as (A')), said propylene homopolymer portion having a Q value of 3.0 to 5.0 which is the weight average molecular weight (Mw)/number average molecular weight (Mn) ratio according to a gel permeation chromatography (GPC), an isotactic pentad fraction of 0.975 or more as calculated by $^{13}$C-NMR, and an intrinsic viscosity of 1.20 to 1.40 dl/g as measured at 135°C in tetralin; said propylene-ethylene random copolymer portion having an intrinsic viscosity of 4.5 to 5.5 dl/g as measured at 135°C in tetralin and a propylene content/ethylene content ratio of 75/25 to 60/40 (weight % ratio), and
   (ii) a mixture of the above crystalline propylene-ethylene block copolymer (i) with a crystalline propylene homopolymer having a Q value as defined above of 3.0 to 5.0, an isotactic pentad fraction as calculated by $^{13}$C-NMR of 0.975 or more and an intrinsic viscosity of 0.95 to 1.15 dl/g as measured at 135°C in tetralin;

   (B) 2 to 10% by weight of an ethylene-butene-1 copolymer rubber which has a Q value as defined above of 2.7 or less, a butene-1 content of 15 to 20% by weight, an intrinsic viscosity of 1.0 to 2.0 dl/g as measured at 70°C in xylene and a Mooney viscosity at 100°C ($ML_{1+4}$ 100°C) of 7 to 90,
   (C) 2 to 10% by weight of an ethylene-propylene copolymer rubber which has a Q value as defined above of 2.7 or less, a propylene content of 20 to 30% by weight, an intrinsic viscosity of 0.8 to 2.0 dl/g as measured at 70°C in xylene and a Mooney viscosity at 100°C ($ML_{1+4}$ 100°C) of 5 to 60 and
   (D) 16 to 25% by weight of talc having an average particle diameter of 4 μm or less, wherein the contents of (A), (A'), (B), (C) and (D) satisfy the following equations 1) to 4):

   1) (A) + (B) + (C) + (D) = 100
   2) $0.08 \leqq [(B) + (C)]/100 \leqq 0.15$
   3) $0.18 \leqq \{[(A') + (B) + (C)]/100\} \leqq 0.25$
   4) $0.20 \leqq \{(B)/[(B) + (C)]\} \leqq 0.80$.

2. The thermoplastic resin composition according to Claim 1, wherein the Q value of the first segment of the component (i) is 3.5 to 4.5.

3. The thermoplastic resin composition according to claim 1 or 2, wherein the isotactic pentad fraction of the first segment of the component (i) is 0.980 or more.

4. The thermoplastic resin composition according to any of Claims 1 to 3, wherein the propylene content/ethylene content ratio of the second segment of the component (i) is 70/30 to 65/35 (weight % ratio).

5. The thermoplastic resin composition according to any of Claims 1 to 4, wherein the intrinsic viscosity [η] of the second segment of the component (i) is 4.8 to 5.3 dl/g as measured at 135°C in tetralin.

6. The thermoplastic resin composition according to any of Claims 1 to 5, wherein the crystalline propylene homopolymer in the component (ii) has a Q value of 3.5 to 4.5, an isotactic pentad fraction of 0.980 or more and an intrinsic viscosity [η] of 0.95 to 1.15 dl/g as measured at 135°C in tetralin.

7. The thermoplastic resin composition according to any of Claims 1 to 6, wherein the ethylene-butene-1 copolymer rubber (B) has a butene-1 content of 16 to 19% by weight, a Q value of 2.5 or less, an intrinsic viscosity of 1.2 to 1.8 dl/g as measured at 70°C in xylene and a Mooney viscosity at 100°C ($ML_{1+4}$ 100°C) of 10 to 80.

8. The thermoplastic resin composition according to any of Claims 1 to 7, wherein the ethylene-propylene copolymer rubber (C) is an ethylene-propylene random copolymer rubber or an ethylene-propylene-non-conjugated diene copolymer rubber having a non-conjugated diene content of 7% by weight or less.

9.  The thermoplastic resin composition according to Claim 8, wherein the ethylene-propylene copolymer rubber (C) has a Q value of 2.5 or less, a propylene content of 22 to 28% by weight, an intrinsic viscosity of 1.0 to 1.8 dl/g as measured at 70°C in xylene and a Mooney viscosity at 100°C (ML$_{1+4}$ 100°C) of 10 to 50.

10. An injection molded article obtainable by subjecting the thermoplastic resin composition according to any of Claims 1 to 9 to injection molding.

11. Use of an injection molded article according to Claim 10 for an instrumental panel.

**Patentansprüche**

1.  Thermoplastische Harz-Zusammensetzung, die eine Schmelzfließfähigkeit (JIS-K-6758, 230 °C) von 8 bis 15 g/ 10 min und einen Elastizitätsmodul (JIS-K-7203) bei 23 °C von 20000 kg/cm$^2$ oder größer aufweist und die umfaßt:

    (A) 60 bis 76 Gew.-% eines kristallinen Polypropylens, das aus der Gruppe ausgewählt ist, die besteht aus:

    (i) einem kristallinen Propylen-Ethylen-Blockcopolymer, zusammengesetzt aus einem Propylen-Homopolymerteil, der das erste Segment darstellt, und einem statistischen Propylen-Ethylen-Copolymerteil, der das zweite Segment darstellt, wobei dieses zweite Segment im folgenden als (A') bezeichnet wird, wobei der Propylen-Homopolymerteil einen Q-Wert von 3,0 bis 5,0 aufweist, der gemäß Gelpermeationchromatographie (GPC) das Verhältnis aus Gewichtsmittel des Molekulargewichtes (Mw)/Zahlenmittel des Molekulargewichtes (Mn) darstellt, eine isotaktische Pentadfraktion von 0,975 oder größer aufweist, berechnet mittels $^{13}$C-NMR, und eine Grenzviskosität von 1,20 bis 1,40 dl/g, gemessen bei 135 °C in Tetralin, aufweist, wobei der statistische Propylen-Ethylen-Copolymerteil eine Grenzviskosität von 4,5 bis 5,5 dl/ g, gemessen bei 135 °C in Tetralin, und ein Verhältnis von Propylengehalt/Ethylengehalt von 75/25 bis 60/40 (Gew.-%-Verhältnis) aufweist, und
    (ii) einem Gemisch des vorstehenden kristallinen Propylen-Ethylen-Blockcopolymeren (i) mit einem kristallinen Propylen-Homopolymeren mit einem Q-Wert, wie vorstehend definiert, von 3,0 bis 5,0, einer isotaktischen Pentadfraktion, berechnet mittels $^{13}$C-NMR, von 0,975 oder größer und einer Grenzviskosität von 0,95 bis 1,15 dl/g, gemessen bei 135 °C in Tetralin;

    (B) 2 bis 10 Gew.-% eines Ethylen-Buten-1-Copolymer-Kautschuks, der einen Q-Wert, wie vorstehend definiert, von 2,7 oder kleiner, einen Buten-1-Gehalt von 15 bis 20 Gew.-%, eine Grenzviskosität von 1,0 bis 2.0 dl/g, gemessen bei 70 °C in Xylol, und eine Mooney-Viskosität bei 100 °C (ML$_{1+4}$ 100 °C) von 7 bis 90 aufweist,
    (C) 2 bis 10 Gew.-% eines Ethylen-Propylen-Copolymer-Kautschuks, der einen Q-Wert, wie vorstehend definiert, von 2,7 oder kleiner, einen Propylengehalt von 20 bis 30 Gew.-%, eine Grenzviskosität von 0,8 bis 2,0 dl/g, gemessen bei 70 °C in Xylol, und eine Mooney-Viskosität bei 100 °C (ML$_{1+4}$ 100 °C) von 5 bis 60 aufweist; und
    (D) 16 bis 25 Gew.-% Talk mit einem mittleren Teilchendurchmesser von 4 µm oder kleiner,

    wobei die Gehalte von (A), (A'), (B), (C) und (D) den folgenden Gleichungen 1) bis 4) genügen:

    1) (A) + (B) + (C) + (D) = 100
    2) $0,08 \leq [(B) + (C)]/100 \leq 0,15$
    3) $0,18 \leq \{[(A') + (B) + (C)]/100\} \leq 0,25$
    4) $0,20 \leq \{(B)/[(B) + (C)]\} \leq 0.80$

2.  Thermoplastische Harz-Zusammensetzung nach Anspruch 1, wobei der Q-Wert des ersten Segmentes der Komponente (i) 3,5 bis 4,5 beträgt.

3.  Thermoplastische Harz-Zusammensetzung nach Anspruch 1 oder 2, wobei die isotaktische Pentadfraktion des ersten Segmentes der Komponente (i) 0,980 oder mehr beträgt.

4.  Thermoplastische Harz-Zusammensetzung nach einem der Ansprüche 1 bis 3, wobei das Verhältnis von Propylengehalt/Ethylengehalt des zweiten Segmentes der Komponente (i) 70/30 bis 65/35 (Gew.-%-Verhältnis) beträgt.

5.  Thermoplastische Harz-Zusammensetzung nach einem der Ansprüche 1 bis 4, wobei die Grenzviskosität [η] des zweiten Segmentes der Komponente (i) 4,8 bis 5,3 dl/g, gemessen bei 135 °C in Tetralin, beträgt.

6. Thermoplastische Harz-Zusammensetzung nach einem der Ansprüche 1 bis 5, wobei das kristalline Propylen-Homopolymer in der Komponente (ii) einen Q-Wert von 3,5 bis 4,5, eine isotaktische Pentadfraktion von 0,980 oder größer und eine Grenzviskosität [η] von 0,95 bis 1,15 dl/g, gemessen bei 135 °C in Tetralin, aufweist.

7. Thermoplastische Harz-Zusammensetzung nach einem der Ansprüche 1 bis 6, wobei der Ethylen-Buten-1-Copolymer-Kautschuk (B) einen Buten-1-Gehalt von 16 bis 19 Gew.-%, einen Q-Wert von 2,5 oder kleiner, eine Grenzviskosität von 1,2 bis 1,8 dl/g, gemessen beim 70 °C in Xylol, und eine Mooney-Viskosität bei 100 °C (ML$_{1+4}$ 100 °C) von 10 bis 80 aufweist.

8. Thermoplastische Harz-Zusammensetzung nach einem der Ansprüche 1 bis 7, wobei der Ethylen-Propylen-Copolymer-Kautschuk (C) ein statistischer Ethylen-Propylen-Copolymer-Kautschuk oder ein Ethylen-Propylennichtkonjugiertes Dien-Copolymer-Kautschuk mit einem Gehalt an nicht-konjugiertem Dien von 7 Gew.-% oder weniger ist.

9. Thermoplastische Harz-Zusammensetzung nach Anspruch 8, wobei der Ethylen-Propylen-Copolymer-Kautschuk (C) einen Q-Wert von 2,5 oder kleiner, einen Propylengehalt von 22 bis 28 Gew.-%, eine Grenzviskosität von 1,0 bis 1,8 dl/g, gemessen bei 70 °C in Xylol, und eine Mooney-Viskosität bei 100 °C (ML$_{1+4}$ 100 °C) von 10 bis 50 aufweist.

10. Spritzgießteil, das durch Spritzgießen der thermoplastischen Harz-Zusammensetzung nach einem der Ansprüche 1 bis 9 erhältlich ist.

11. Verwendung eines Spritzgießteils nach Anspruch 10, als Instrumententafel.

**Revendications**

1. Composition de résine thermoplastique qui possède un indice de fluidité à chaud (JIS-K-6758, 230°C) de 8 à 15 g/10 min et un module en flexion (JIS-K-7203) à 23°C de 20 000 kg/cm$^2$ ou plus et qui comprend:

   (A) 60 à 76% en poids d'un polypropylène cristallin choisi dans le groupe formé par:

   (i) un copolymère cristallin séquencé propylène/éthylène composé d'une portion homopolymère de propylène qui est le premier segment et une portion copolymère statistique propylène/éthylène qui est le deuxième segment ce deuxième segment est désigné ci-après par (A'), ladite portion homopolymère de propylène ayant une valeur Q de 3,0 à 5,0 qui est le rapport de la masse moléculaire moyenne en masse (Mm)/ la masse moléculaire moyenne en nombre (Mn) selon une chromatographie de perméation sur gel (GPC), une fraction pentade isotactique de 0,975 ou plus, calculée par RMN $^{13}$C, et une viscosité intrinsèque de 1,20 à 1,40 dl/g, telle que mesurée à 135°C dans la tétraline; ladite portion copolymère statistique propylène/éthylène ayant une viscosité intrinsèque de 4,5 à 5,5 dl/g, telle que mesurée à 135°C dans la tétraline et un rapport de teneur en propylène/teneur en éthylène de 75:25 à 60:40 (rapport % en poids); et
   (ii) un mélange du copolymère cristallin séquencé propylène/éthylène ci-dessus (i) avec un homopolymère de propylène cristallin ayant une valeur Q telle que définie ci-dessus de 3,0 à 5,0, une fraction pentade isotactique, calculée par RMN $^{13}$C de 0,975 ou plus et une viscosité intrinsèque de 0,95 à 1,15 dl/g, mesurée à 135°C dans la tétraline;

   (B) 2 à 10% en poids d'un caoutchouc copolymère éthylène/butène-1 qui possède une valeur Q telle que définie ci-dessus de 2,7 ou moins, une teneur en butène-1 de 15 à 20% en poids, une viscosité intrinsèque de 1,0 à 2,0 dl/g, telle que mesurée à 70°C dans le xylène et une viscosité de Mooney à 100°C (ML$_{1+4}$ 100°C) de 7 à 90;
   (C) 2 à 10% en poids d'un caoutchouc copolymère propylène/éthylène qui possède une valeur Q telle que définie ci-dessus de 2,7 ou moins, une teneur en propylène de 20 à 30% en poids, une viscosité intrinsèque de 0,8 à 2,0 dl/g, telle que mesurée à 70°C dans le xylène et une viscosité de Mooney à 100°C (ML$_{1+4}$ 100°C) de 5 à 60; et
   (D) 16 à 25% en poids de talc ayant un diamètre moyen de particule de 4 μm ou moins;

dans laquelle les teneurs de (A), (A'), (B), (C) et (D) satisfont les équations suivantes 1) à 4):

1) (A) + (B) + (C) + (D) = 100
2) $0,08 \leq [(B) + (C)]/100 \leq 0,15$
3) $0,18 \leq \{[(A') + (B) + (C)]/100\} \leq 0,25$
4) $0,20 \leq \{(B)/[(B) + (C)]\} \leq 0,80$.

**2.** Composition de résine thermoplastique selon la revendication 1, dans laquelle la valeur Q du premier segment du composant (i) est 3,5 à 4,5.

**3.** Composition de résine thermoplastique selon la revendication 1 ou 2, dans laquelle la fraction pentade isotactique du premier segment du composant (i) est 0,980 ou plus.

**4.** Composition de résine thermoplastique selon l'une quelconque des revendications 1 à 3, dans laquelle le rapport teneur en propylène/teneur en éthylène du deuxième segment du composant (i) est 70:30 à 65:35 (rapport % en poids).

**5.** Composition de résine thermoplastique selon l'une quelconque des revendications 1 à 4, dans laquelle la viscosité intrinsèque [η] du deuxième segment du composant (i) est 4,8 à 5,3 dl/g, telle que mesurée à 135°C dans la tétraline.

**6.** Composition de résine thermoplastique selon l'une quelconque des revendications 1 à 5, dans laquelle l'homopolymère propylène cristallin dans le composant (ii) possède une valeur Q de 3,5 à 4,5, une fraction pentade isotactique de 0,980 ou plus et une viscosité intrinsèque [η] de 0,95 à 1,15 dl/g, telle que mesurée à 135°C dans la tétraline.

**7.** Composition de résine thermoplastique selon l'une quelconque des revendications 1 à 6, dans laquelle le caoutchouc copolymère éthylène/butène-1 (B) possède une teneur en butène-1 de 16 à 19% en poids, une valeur Q de 2,5 ou moins, une viscosité intrinsèque de 1,2 à 1,8 dl/g, telle que mesurée à 70°C dans le xylène et une viscosité de Mooney à 100°C ($ML_{1+4}$ 100°C) de 10 à 80.

**8.** Composition de résine thermoplastique selon l'une quelconque des revendications 1 à 7, dans laquelle le caoutchouc copolymère propylène/éthylène (C) est un caoutchouc copolymère statistique propylène/éthylène ou un caoutchouc copolymère éthylène/propylène/diène non conjugué ayant une teneur en diène non conjuguée de 7% en poids ou moins.

**9.** Composition de résine thermoplastique selon la revendication 8, dans laquelle le caoutchouc copolymère propylène/éthylène (C) possède une valeur Q de 2,5 ou moins, une teneur en propylène de 22 à 28% en poids, une viscosité intrinsèque de 1,0 à 1,8 dl/g, telle que mesurée à 70°C dans le xylène et une viscosité de Mooney à 100°C ($ML_{1+4}$ 100°C) de 10 à 50.

**10.** Article moulé par injection pouvant être obtenu en soumettant la composition de résine thermoplastique selon l'une quelconque des revendications 1 à 9 au moulage par injection.

**11.** Utilisation d'un article moulé par injection selon la revendication 10 pour un panneau instrumental.